# EUROPEAN PATENT APPLICATION

(11) **EP 4 841 201 A2**
(43) Date of publication of application: **18.11.2026**
(21) Application number: 26208815.6
(22) Date of filing: 13.03.2020
(51) Int. Cl.: F41A 23/04, F16B 7/14, F16M 11/00, F16M 13/00, F41A 23/10, F41A 23/14

(54) **COLUMN AND LEG LOCKING ASSEMBLIES FOR STATIONARY PLATFORMS**

(30) Priority: 13.03.2019 US 201962817876 P
(62) Document number(s) of the earlier application(s) in accordance with Art. 76 EPC: 20770123.6 / 3 938 728
(71) Applicant: Sheltered Wings, Inc., Barneveld WI 53507 (US)
(72) Inventor: COLLINS, Alec, Barneveld (US); HAMILTON, David M., Barneveld (US)
(74) Representative: Barker Brettell LLP

(57) **Abstract**

A locking assembly comprising: a locking ring secured to a first cylindrical section, the first cylindrical section insertable into a second cylindrical section and having a bearing surface at a second edge; a first rotation stop secured to the second cylindrical section at a first end and slidable against the locking ring at a second end; and a locking nut having a first end in threaded engagement with the first end of the rotation stop and having a second end secured to a locking wedge having a bearing surface, wherein rotational movement of the locking nut in a first direction causes the bearing surface of the locking wedge to engage the bearing surface of the locking ring and rotational movement of the locking nut in a second direction causes the bearing surface of the locking wedge to disengage the bearing surface of the locking ring.

## Description

### CROSS-REFERENCE TO RELATED APPLICATIONS

This application is a non-provisional application of and claims priority to U.S. Provisional Application No. 62/817,876 filed March 13, 2019, which is incorporated herein by reference in its entirety.

### FIELD

The disclosure relates to locking assemblies. In one embodiment, the disclosure relates to locking assemblies for a center column of a stationary platform. In another embodiment, the disclosure relates to locking assemblies for legs of a stationary platform.

### BACKGROUND

When using a long rifle, AR platform rifle, shotgun or similar long firearm, it is common to use a bipod, tripod or other stationary platform to support the end of the firearm when shooting, particularly when targeting shooting. Stationary platforms support a firearm to provide a stable base to improve accuracy compared to simply holding the firearm without support. To provide a stable base, stationary platforms include two or more legs which extend diagonally downward from a central firearm mount, which may be on a central column. The central column and/or legs often come in two or more pieces to allow for adjusting the length of the column and/or legs and also allows for a user to decrease the weight of a stationary platform by leaving pieces behind when they are not needed.

When multiple parts are of a central column or legs are connected, it is important that the connection be tight and stable. However, current connections do not provide the necessary stability. Multi-piece central columns are generally joined by threading the pieces together. When in use, a user will rotate the top of the center column axially (e.g., to aim) and the threads are unintentionally loosened. Similarly, current twist-lock designs for telescoping legs do not restrict the amount that the lock unthreads. As a result, legs can collapse if the twist lock is not turned (or not turned far enough) in the right direction.

Therefore, it would be desirable to provide a locking mechanism for use with a multi-piece center column of a stationary platform and a locking mechanism for use with telescoping legs of a stationary platform to prevent accidental loosening or detachment of these components.

### SUMMARY

In one embodiment, the disclosure provides a locking assembly. In an embodiment, the locking assembly secures two column portions together.

In one embodiment, the locking assembly comprises a first column portion having a hollow interior with a generally circular cross-section along a length of the first column portion; an insert secured within an end portion of the first column portion, the insert having a first end which is solid contained within the first column portion, a threaded channel passing through the solid end, an inner cavity, and a second end which opens to the inner cavity; wherein the inner cavity has a non-circular cross-section; a second column portion having a main body and a first end, the first end having a non-circular cross-section corresponding to that of the inner cavity of the insert, wherein the first end is slidingly but not rotatably engaged with the inner cavity of the insert, the second column portion further having a channel through the first end, the channel being coaxial with the threaded channel of the insert; and a fastening rod having a threaded end, wherein the fastening rod passes through the channel of the second column portion and engages the threaded channel of the insert.

In another embodiment, fastening rod further includes a fastening ring adjacent the threaded end, wherein the fastening ring has external dimensions greater than those of the channel of the second column portion. In another embodiment, the non-circular cross-section of the inner cavity of the insert is selected from square, rectangular, triangular, and polygonal. In another embodiment, the non-circular cross-section of the first end of the second column is selected from square, rectangular, triangular, and polygonal. In another embodiment, the non-circular cross-section of the inner cavity of the insert is square. In another embodiment, the non-circular cross-section of the first end of the second column portion is square. In another embodiment, the first column portion has an outer diameter which is the same as an outer diameter of the main body of the second column portion.

In another embodiment, the disclosure provides a stationary platform comprising the locking assembly. In another embodiment, the stationary platform comprises a central column, the central column comprising the locking assembly. In an embodiment, the stationary platform is a tripod.

In one embodiment, the disclosure provides a further locking assembly. In an embodiment, the further locking assembly secures two telescoping cylindrical portions together.

In one embodiment, the locking assembly comprises a locking ring secured to a first cylindrical section, the first cylindrical section insertable into a second cylindrical section and having a bearing surface at a second edge; a first rotation stop secured to the second cylindrical section at a first end and slidable against the locking ring at a second end; and a locking nut having a first end in threaded engagement with the first end of the rotation stop and having a second end secured to a locking wedge having a bearing surface, wherein rotational movement of the locking nut in a first direction causes the bearing surface of the locking wedge to engage the bearing surface of the locking ring and rotational movement of the locking nut in a second direction causes the bearing surface of the locking wedge to disengage the bearing surface of the locking ring.

In another embodiment, the locking ring has a first edge containing a second bearing surface and the first rotation stop has a bearing surface corresponding to the second bearing surface of the locking ring. In another embodiment, rotational movement of the locking nut in the first direction causes the second bearing surface of the locking ring to engage the bearing surface of the first rotation stop and rotational movement of the locking nut in the second direction causes the second bearing surface of the locking ring to disengage the bearing surface of the first rotation stop. In another embodiment, the locking ring, first rotation stop, locking nut and locking wedge are generally cylindrical and coaxial with each other and the first and second cylindrical sections. In another embodiment, the first rotation stop has a second bearing surface and the locking nut has a first bearing surface, the second bearing surface of the first rotation stop and the first bearing surfaces of the locking nut being opposed to one another, and wherein rotational movement of the locking nut in the first direction is limited by engagement of the second bearing surface of the first rotation stop and the first bearing surface of the locking nut.

In another embodiment, the locking assembly further includes a second rotation stop secured to the first rotation stop, wherein the locking nut is slidable against the second rotation stop. In another embodiment, the second rotation stop has a first bearing surface and the locking nut has a second bearing surface, the first bearing surface of the second rotation stop and the second bearing surface of the locking nut being opposed to one another, and wherein rotational movement of the locking nut in the second direction is limited by engagement of the first bearing surface of the second rotation stop and the second bearing surface of the locking nut.

In another embodiment, the first end of the first rotation stop and the first end of the locking nut are correspondingly threaded, and wherein the thread pitch is from 0.5 mm to 1.5 mm. In one embodiment, the threaded pitch is at least 0.5 mm. In another embodiment, the threaded pitch is no greater than 1.5 mm. In one embodiment, the threaded pitch is from is from 0.5 mm to 1.25 mm or from 0.5 mm to 1.0 mm or from 0.5 mm to 0.75 mm. In yet another embodiment, the threaded pitch is from 0.6 mm to 1.5mm or from 0.7 mm to 1.5 mm or from 0.8 to 1.5 mm or from 0.9 mm to 1.5 mm or from 1.0 mm to 1.5 mm or from 1.25 mm to 1.5 mm.

In another embodiment, the locking assembly further includes a grip secured to the locking nut and locking wedge.

In another embodiment, the disclosure provides a stationary platform comprising the further locking assembly. In another embodiment, the stationary platform comprises at least one telescoping leg, the at least one telescoping leg comprising the locking assembly. In an embodiment, the stationary platform is a tripod.

In another embodiment, the disclosure provides a stationary platform comprising one or both locking assemblies as described herein, or any combination of one or both locking assemblies as described herein.

Other embodiments will be evident from a consideration of the drawings taken together with the detailed description provided herein.

### BRIEF DESCRIPTION OF THE DRAWINGS

FIG. 1 shows an exemplary stationary platform that is a tripod, in accordance with embodiments of the disclosure.
FIG. 2 is a cross-sectional view of a locking assembly for a center column of a stationary platform, in accordance with embodiments of the disclosure.
FIG. 3 is a further cross-sectional view of the locking assembly of FIG. 2 in accordance with embodiments of the disclosure.
FIG. 4 is a cross-sectional view of a locking assembly for an adjustable leg of a stationary platform in accordance with embodiments of the disclosure.
FIG. 5 is a side view of a portion of an inner leg section with a section stop in accordance with embodiments of the disclosure.
FIG. 6 is an enlarged view of portion VI of FIG. 4.
FIG. 7 is an enlarged view of portion VII of FIG. 4.
FIG. 8 is an enlarged view of portion VIII of FIG. 4.

### DETAILED DESCRIPTION

The assemblies, apparatuses and methods disclosed herein will now be described more fully hereinafter with reference to the accompanying drawings, in which embodiments of the disclosure are shown. The apparatuses and methods disclosed herein may, however, be embodied in many different forms and should not be construed as limited to the embodiments set forth herein. Rather, these embodiments are provided so that the disclosure will be thorough and complete and will fully convey the scope of the invention to those skilled in the art.

It will be appreciated by those skilled in the art that the set of features and/or capabilities may be readily adapted within the context of a stationary platform, such as a bipod, tripod, and other permutations of stationary platforms. Further, it will be appreciated by those skilled in the art that the various features and/or capabilities described herein may be deployed in various industries, including shooting, photography, surveying, and other areas in which a stable stationary platform is desired to secure a viewing optic, firearm, sight, camera, and other such device.

### Definitions

Like numbers refer to like elements throughout. It will be understood that, although the terms first, second, etc., may be used herein to describe various elements, components, regions, and/or sections, these elements, components, regions and/or sections should not be limited by these terms. These terms are used only to distinguish one element, component, region and/or section from another element, component, region and/or section. Thus, a first element, component, region or section could be termed a second element, component, region or section without departing from the disclosure.

The numerical ranges in this disclosure are approximate, and thus may include values outside of the range unless otherwise indicated. Numerical ranges include all values from and including the lower and the upper values (unless specifically stated otherwise), in increments of one unit, provided that there is a separation of at least two units between any lower value and any higher value. As an example, if a compositional, physical or other property, such as, for example, distance, speed, velocity, etc., is from 10 to 100, it is intended that all individual values, such as 10, 11, 12, etc., and sub ranges, such as 10 to 44, 55 to 70, 97 to 100, etc., are expressly enumerated. For ranges containing values which are less than one or containing fractional numbers greater than one *(e.g.,* 1.1, 1.5, etc.), one unit is considered to be 0.0001, 0.001, 0.01 or 0.1, as appropriate. For ranges containing single digit numbers less than ten *(e.g., 1* to 5), one unit is typically considered to be 0.1. These are only examples of what is specifically intended, and all possible combinations of numerical values between the lowest value and the highest value enumerated, are to be considered to be expressly stated in this disclosure. Numerical ranges are provided within this disclosure for, among other things, distances from a user of a device to a target.

Spatial terms, such as "beneath," "below," "lower," "above," "upper," and the like, may be used herein for ease of description to describe one element's or feature's relationship to another element(s) or feature(s) as illustrated in the figures. It will be understood that the spatially relative terms are intended to encompass different orientations of device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90° or at other orientations) and the spatially relative descriptors used herein interpreted accordingly.

As used herein, the term "and/or" includes any and all combinations of one or more of the associated listed items. For example, when used in a phrase such as "A and/or B," the phrase "and/or" is intended to include both A and B; A or B; A (alone); and B (alone). Likewise, the term "and/or" as used in a phrase such as "A, B and/or C" is intended to encompass each of the following embodiments" A, B and C; A, B, or C; A or C; A or B; B or C; A and C; A and B; B and C; A (alone); B (alone); and C (alone).

It will be understood that when an element or layer is referred to as being "on," "connected to" or "coupled to" another element or layer, it can be directly on, connected or coupled to the other element or layer. Alternatively, intervening elements or layers may be present. In contrast, when an element or layer is referred to as being "directly on," "directly connected to" or "directly coupled to" another element or layer, there are no intervening elements or layers present.

As used herein, "bearing surface" is the area of contact between two objects.

As used herein, the terms "user" and "shooter" interchangeably refer to either the operator making the shot or an individual observing the shot in collaboration with the operator making the shot.

As used herein, the term "viewing optic" refers to an apparatus or assembly used by a user, a shooter or a spotter to select, identify and/or monitor a target. A viewing optic may rely on visual observation of the target or, for example, on infrared (IR), ultraviolet (UV), radar, thermal, microwave, magnetic imaging, radiation including X-ray, gamma ray, isotope and particle radiation, night vision, vibrational receptors including ultra-sound, sound pulse, sonar, seismic vibrations, magnetic resonance, gravitational receptors, broadcast frequencies including radio wave, television and cellular receptors, or other image of the target. The image of the target presented to a user/shooter/spotter by a viewing optic may be unaltered, or it may be enhanced, for example, by magnification, amplification, subtraction, superimposition, filtration, stabilization, template matching, or other means. The target selected, identified and/or monitored by a viewing optic may be within the line of sight of the shooter or tangential to the sight of the shooter. In other embodiments, the shooter's line of sight may be obstructed while the viewing optic presents a focused image of the target. The image of the target acquired by the viewing optic may, for example, be analog or digital, and shared, stored archived or transmitted within a network of one or more shooters and spotters by, for example, video, physical cable or wire, **IR,** radio wave, cellular connections, laser pulse, optical 802.11b or other wireless transmission using, for example, protocols such as html. SML, SOAP, X.25, SNA, *etc.,* Bluetooth^{Tm}, Serial, USB or other suitable image distribution method. The term "viewing optic" is used interchangeably with "optic sight."

As used herein, a "firearm" is a portable gun, being a barreled weapon that launches one or more projectiles often driven by the action of an explosive force. As used herein, the term "firearm" includes a handgun, a long gun, a rifle, shotgun, a carbine, automatic weapons, semi-automatic weapons, a machine gun, a sub-machine gun, an automatic rifle and an assault rifle.

As used herein, a "stationary platform" is a structure or device used to support a viewing optic and/or firearm.

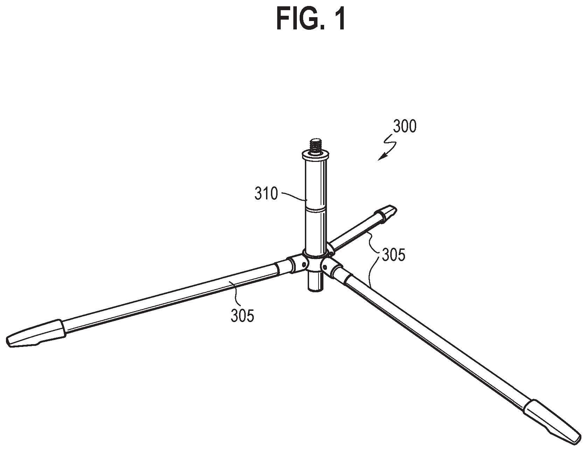

FIG. 1 illustrates an exemplary stationary platform **300** that in the embodiment shown is a tripod with a center column **305** connected to three legs **310.** The center column **305** has two sections which connect to extend the length of the center column **305.** Similarly, the legs **310** telescope to change the length of the legs **310.**

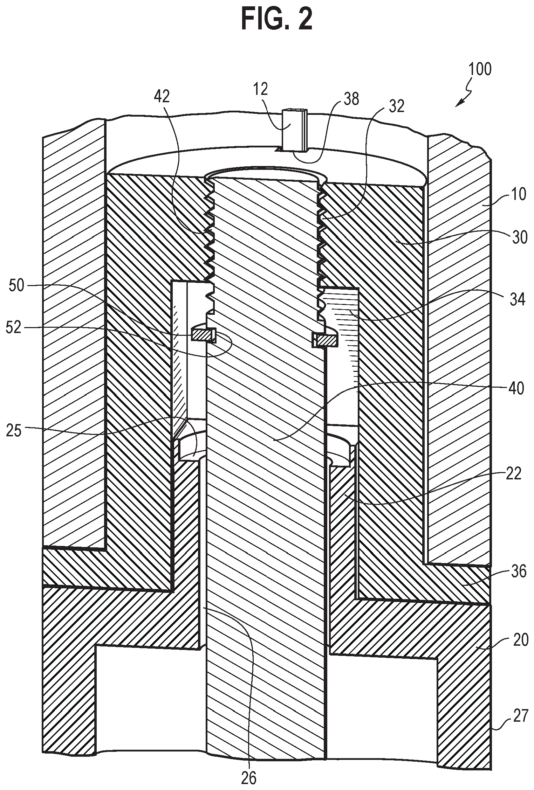

FIG. 2 is a cross-sectional view of a locking assembly **100** showing the connection of a first column section 10 and a second column section **20.** In the embodiment shown, the first column section 10 is an upper column section and the second column section **20** is a lower column section. In one representative embodiment shown, the inner diameter of the first column section **10** is generally circular. The inner diameter of the first column may have other suitable shapes and geometries.

An insert **30** is secured in the first column section **10**. The insert **30** decreases the inner diameter of the first column section **10**. In the embodiment shown, the insert **30** is generally cylindrical with a circular cross-section. The outer diameter of the insert **30** is just less than the inner diameter of the first column section **10** to allow the insert **30** to be slid into the first column section **10**. A terminating flange **36** extending radially from the lower portion of the insert **30** prevents the insert **30** from being inserted too far into the first column section **10**. A threaded bore **32** extends through the upper surface of the insert **30.**

In an embodiment, the insert **30** is permanently secured to the inside of the first column section **10**. This permanent connection can be achieved in any number of ways, including, for example, by an adhesive means such as glue, epoxy, and the like, by a mechanical connection such as mating and/or interlocking structures, or combinations of these and other means. In further embodiments, the insert **30** is removably secured to the inside of the first column section **10.**

In the embodiment shown, the inner surface of the first column section 10 contains a guiding protuberance **12** and the outer surface of the insert **30** contains a corresponding channel **38.** When sliding the insert **30** into the first column section **10**, the guiding protuberance **12** and channel **38** must be aligned. This facilitates assembly of the first column section **10** and insert **30.** Further, the engagement of the protuberance **12** and channel **38** prevents rotation of the insert **30** inside the first column section **10.**

While the outer surface of the insert **30** is generally cylindrical with a circular cross-section, the inner cavity **34** of the insert **30** is non-circular. That is, the inner cavity **34** of the insert **30** does not have a circular cross-section. In the embodiment shown, the inner cavity **34** is square (has a square cross-section). However, in further embodiments, the inner cavity **34** may have any non-circular geometry including, but not limited to, square, rectangle, oval, triangle, star, trapezoid, or any polygon.

The geometry of the inner cavity **34** of the insert **30** matches the outer geometry of the male end **22** of the second column section **20.** The male end **22** of the second column section **20** extends outwardly (and upwardly, in the orientation shown) from the main body **27** of the second column portion **20.** The second column portion is generally cylindrical with a circular cross-section and having and outer diameter approximately equal to that of the first column section **10.**

The outer geometry of the male end **22** is any non-circular geometry corresponding to that of the inner cavity **34** of the inset **30.** In the specific embodiment shown, that geometry is square; however, as detailed above, any non-circular geometry is acceptable, including, but not limited to, square, rectangle, oval, triangle, star, trapezoid, or any polygon. A channel **26** passes through the male end **22** and opens into the inner cavity **34** of the insert **30.** Channel **26** and channel **32** are coaxially aligned; however, unlike channel **32,** the interior of channel **26** is not threaded.

The male end **22** also includes a shelf **25** which, in the embodiment shown, is a circular recess in the male end **22.**

Fastening rod **40** is received in channels **26** and **32.** The fastening rod **40** is the connector that holds the first column portion 10 and second column portion **20** together. The fastening rod is generally cylindrical with a circular cross-section. The tip **42** of the fastening rod **40** is threaded with the thread pattern corresponding to that of the threaded channel **32.** It will be appreciated that the inner diameter of the channel **26** is just bigger than the outer diameter of the fastening rod **40** to permit the fastening rod **40** to be easily inserted into the channel **26** and, as discussed below, to spin freely within the channel **26.**

The fastening rod **40** further includes a fastening ring **50** which is secured to the fastening rod **40** by engagement with a groove **52.** The fastening ring **50** increases the diameter of the fastening rod **40** and engages the shelf **25** to prevent the fastening rod **40** from disengaging the male end **22** of the second column portion **20.**

Turning to FIG. 2, the fastening rod **40** terminates at its lower end in a grasping portion **45.**

In use, the first column portion **10** will always be used by a user when the stationary platform **300** is used. The viewing optic is secured to connection member **17**, which, in the embodiment shown, is a threaded connector; however, in other embodiments, a viewing optic can secure to the first column portion 10 in any manner. When a user wants to increase the length of the center column by using a second column portion **20,** the second column portion **20** (and more specifically, the male end **22** and threaded end **42** of the fastening rod **40,** are slid into the insert **30** and first column portion. The male end **22** must be oriented such that the non-circular geometry of its outer surface aligns with the non-circular geometry of the cavity **34.** Once properly aligned, the fastening rod **40** is twisted using the grasping portion **45**. Being freely rotatable in the channel **26**, the rotation of the fastening rod **40** does not cause rotation of the second column portion **20**. Once connected, any attempted rotation of the first column portion 10 or second column portion **20** will not disengage the two column portions due to the non-circular geometry of the male portion **22** and cavity **34**. That is, the two column portions **10**, **20** cannot rotate independently of one another because the square shape of the male portion **22** cannot spin within the square shape of the cavity **34**.

To disengage the first and second column portions **10**, **20**, the user must rotate the fastening rod **40** using the grasping portion 45. Once the threaded end 42 of the fastening rod **40** is disengaged from the threaded channel **32**, the fastening rod **40** and second column portion **20** together can be disengaged from the insert 30 and first column portion **10**.

It will be appreciated that existing stationary platforms can be retrofit with the locking assembly **100**. The insert 30 can be sized to fit an existing first column portion **10** and a corresponding second column portion **20** compatible with the insert **30** provided.

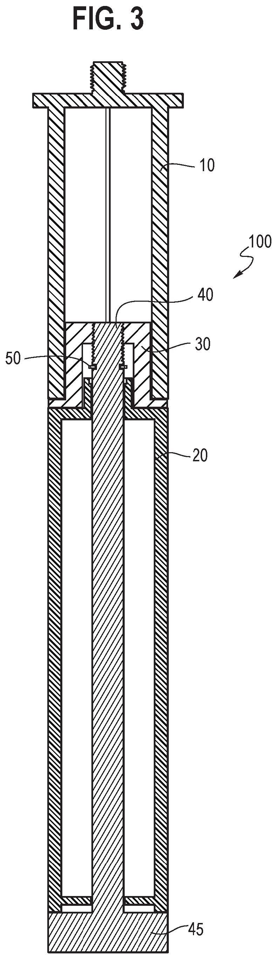

FIG. 3 is a cross-sectional view of a locking assembly **200** showing the connection of a small leg section **110** which telescopes into and is secured with a large leg section **120**. In the embodiment shown, the small leg section **110** is generally cylindrical with a circular cross-section which is generally uniform along the length of the small leg section **110**. Similarly, the large leg section **120** is generally cylindrical with a circular cross-section which is generally uniform along the length of the large leg section **120**. The outer diameter of the small leg section **110** is less than the inner diameter of the large leg section **120** so that the small leg section **110** is slidable (telescoping) within the large leg section **120**.

The small leg section **110** has a section stop **160** and a locking ring **170** secured to its outer diameter.

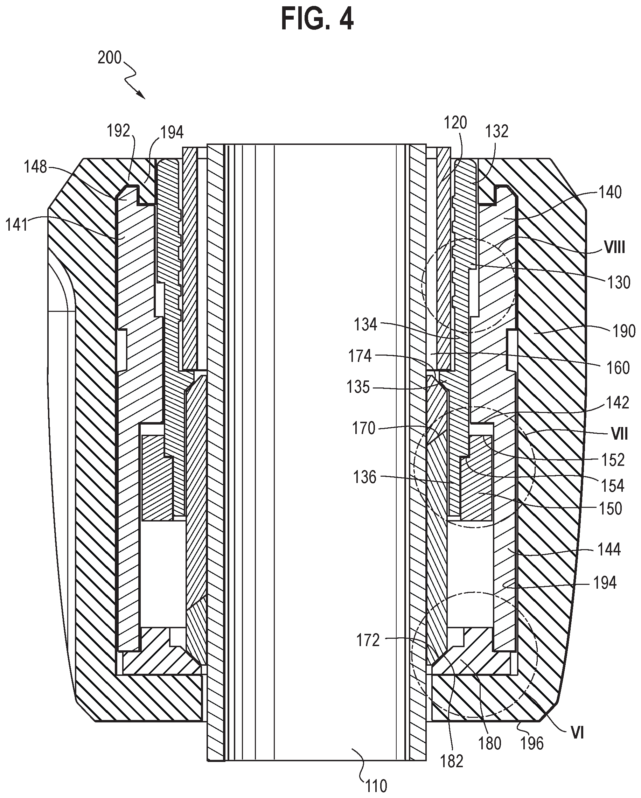

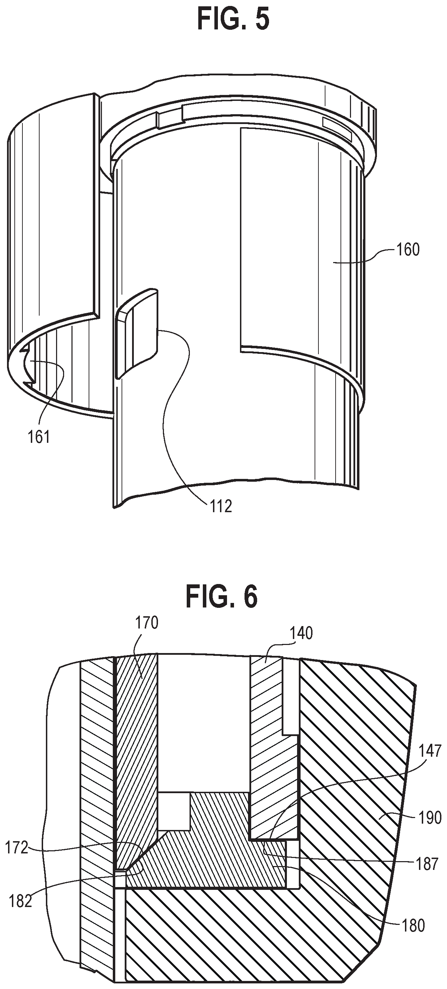

The section stop **160** can be secured to the outer surface of the small leg section **110** in any way. For example, as shown in FIG. 5, the outer surface of the small leg section **110** includes a female locating portion **112** which engages a male locating portion **161** on the inner surface of the section stop **160**. Alternate and/or additional securing means may be used to secure the section stop **160** to the outer surface of the small leg portion **110**, including, but not limited to, adhesive means such as glue, epoxy, and the like, by a mechanical connection such as mating and/or interlocking structures, or combinations of these and other means. As shown in FIGS. 4 and 5, the section stop **160** is a continuous cylinder around the outer diameter of the small leg section **110**. However, in further embodiments, the section stop **160** may be discontinuous around the outer surface of the small leg section **110** provided there is sufficient coverage to engage the necessary portions of the locking assembly **200** as described in further detail below.

The locking ring **170 is** also shown as a continuous cylinder around the outer diameter of the small leg section **110**, though can also be discontinuous in other embodiments provided there is sufficient structure to engage the necessary portions of the locking assembly **200** as described in further detail below. The locking ring **170** as shown also has a generally trapezoidal cross-section, with diagonal bearing surfaces **172**, **174.**

Similarly, a rotation stop **130** is secured to the outer diameter (outer surface) of the large leg section **120.** Like the section stop **160,** the rotation stop **130** may be secured to the outer surface of the large leg section **120** using any means suitable, including, but not limited to, adhesive means such as glue, epoxy, and the like, by a mechanical connection such as mating and/or interlocking structures (e.g., threads), or combinations of these and other means. Further, in the embodiment shown, the rotation stop **130** is generally cylindrical and continuous around the outside diameter of the large leg section **120.** However, in further embodiments, the rotation stop **130** may be discontinuous around the outer surface of the large leg section **120** provided there is sufficient coverage to engage the necessary portions of the locking assembly **200** as described in further detail below.

The first rotation stop **130** has a first (upper) portion **132** which is generally thicker than the rest of the first rotation stop **130.** In other words, the outer diameter of the first portion **132** is greater than the outer diameter of the remaining portions of the first rotation stop **130.** The first portion **132** transitions suddenly to a middle portion **134** having an outer diameter less than that of the first portion **132.** Bearing surface **139** results from the sudden transition of the first portion **132** to the middle portion **134.** Part way along the inner surface of the middle portion **134** is protuberance **135.** Protuberance **135** has two bearing surfaces - an upper and a lower. The upper bearing surface engages the bottom surface of the large leg section **120** to limit how far up on the large leg section **120** the first rotation stop **130** can be secured. The middle portion **134** again transitions suddenly to the third portion **136,** thereby forming bearing surface **138.**

A locking nut **140** is positioned on the outer surface of the first rotation stop **130**. In the embodiment shown, portions of the outer surface of the first rotation stop **130** are threaded and corresponding portions of the inner surface of the locking nut **140** are correspondingly threaded. Engagement of the threads secures the locking nut **140** to the first rotation stop **130** while permitting rotating movement of the locking nut **140** relative to the first rotation stop **130**. However, in further embodiments, the first rotation stop **130** and locking nut **140** may be secured to one another in any manner which permits rotational movement of the two components relative to one another.

As with the section stop **160** and first rotation stop **130**, the locking nut **140** is generally cylindrical and continuous around the outside diameter of the first rotation stop **130**. However, in further embodiments, the locking nut **140** may be discontinuous around the outer surface of the first rotation stop **130** provided there is sufficient coverage to engage the necessary portions of the locking assembly **200** as described in further detail below.

The locking nut **140** has a first portion **141** which transitions abruptly to second portion **144**. The first portion **141** has a thickness greater than that of second portion **144**, with the inner diameter of the second portion **144** being greater than that of the first portion **141** and resulting in bearing surface **142**.

In the embodiment shown in FIG. 4, the inner surface of the first portion **141** is in threaded engagement with the outer surface of the first rotation stop **130,** and particularly with the first and second portions **132**, **134** of the first rotation stop **130**. A second rotation stop **150** is in threaded engagement with the third portion **136** of the first rotation stop **130**.

The second rotation stop **150** is generally cylindrical and continuous around the outside diameter of the third portion **136** of the first rotation stop **130**. However, in further embodiments, the second rotation stop **150** may be discontinuous provided there is sufficient coverage to engage the necessary portions of the locking assembly **200** as described in further detail below.

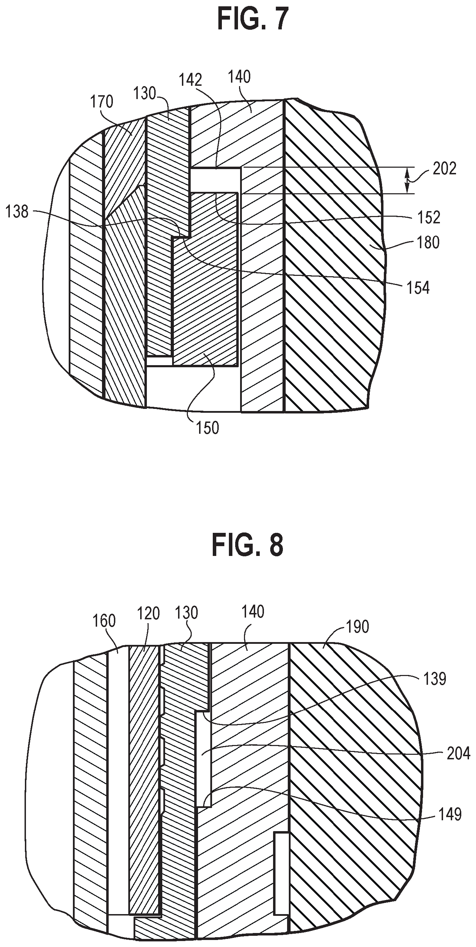

As shown in FIG. 7, the second rotation stop **150** is positioned between the second portion **144** of the locking nut **140** and the third portion **136** of the first rotation stop **130**. The second rotation stop **150** therefore has a generally consistent outer diameter with an inner diameter greater at its first portion **157** than at its second portion **159**. The transition between the first and second portions **157**, **159** is abrupt, resulting in bearing surface **154** which engages bearing surface **138** to limit how far along the first rotation stop **130** the second rotation stop **150** can go. Upper surface **152** of the second rotation stop **150** is shown as neighboring, though not quite touching, bearing surface **142** of the locking nut **140**.

Once the small leg section **110** is properly assembled with section stop 160 and locking ring **170**, and the large leg section **120** is properly assembled with first rotation stop **130**, locking nut **140**, and second rotation stop **150**, the small leg section assembly (**110**, **160**, **170**) is slid into the large leg section **120** until the bearing surface **174** of the locking ring **170** engages the protuberance **135** at its lower bearing surface. When in position, the section stop **160** is adjacent and slidable against the inner surface of the large leg section **120**, and the inner surface of the third portion **136** of the first rotation stop **130** is adjacent and slidable against the outer surface of the locking ring **170**.

To prevent the small leg section assembly (**110**, **160**, **170**) from disengaging the large leg section assembly (**120**, **130**, **140**, **150**), a locking wedge **180** is threaded into the inner diameter of the locking nut **140** at its second portion **144**. As shown in FIG. 6, the locking wedge **180** has a bearing surface **182** which abuts the bearing surface **172** of the locking ring **170** and a bearing surface **187** which abuts the bottom surface **147** of the locking nut **140**.

Grip **190** is secured over the entire locking assembly **200** to protect the assembly **200** as well as to permit a user to manipulate the assembly as described more fully below. As shown in FIG. 4, the grip **190** is generally cylindrical with an outer surface and an inner surface geometry designed to conform to the portions of the locking assembly **200** to which it secures. Specifically, the grip **190** has an upper portion **192** specifically designed to engage the contours of the upper section **148** of the locking nut **140**. The smooth inner surface **194** of the grip **190** contacts the outer surface of the locking nut **140**. The bottom portion **196** of the grip **190** contacts the underside of the locking wedge **180**. The upper and bottom portions **192**, **196** of the grip project inward toward the large leg section **120** and small leg section **110**, respectively, to completely enclose the locking assembly **200**.

The grip **190** may be permanently or removably secured to the outer surface of the locking nut **140** using any means suitable, including, but not limited to, adhesive means such as glue, epoxy, and the like, by a mechanical connection such as mating and/or interlocking structures (e.g., threads), or combinations of these and other means. Further, in the embodiment shown, the grip **190** is generally cylindrical and continuous around the outside diameter of the locking assembly **200**. However, in further embodiments, the grip **190** may be discontinuous around the outside of the locking assembly **200** provided there is sufficient coverage to engage the necessary portions of the locking assembly **200** as described in further detail below.

In the embodiment shown in FIG. 4, the large leg section **120** is the leg section which is fixed to the top of a stationary platform, such as a tripod. The small leg section **110** extends outward from the inside of the large leg section **120** to increase the overall length of the leg (e.g., increase tripod height). The small leg section **110** and section stop **160** are fixedly secured to one another, meaning that, during operation of the locking assembly **200**, the small leg section **110** and section stop **160** are not designed to move relative to one another, but rather move together as an assembly. Similarly, the large leg section **120**, first rotation stop **130** and second rotation stop **150** are fixedly secured to one another so that the two components do not move relative to one another, but rather as an assembly. The grip **190**, locking nut **140** and locking wedge **180** are also fixedly secured to one another, with the three parts moving together as an assembly. In one embodiment, the locking ring **170** is secured or held in place by other components of the assembly. In one embodiment, the locking ring **170** is encapsulated by the other components of the assembly. In one embodiment, the locking ring **170** is not permanently attached to any piece or component of the assembly.

The locking wedge **180** is slidable against the locking ring **170**. The locking nut **140** is in threaded (movable) connection with the first rotation stop **130**, meaning rotation of the grip **190**/locking nut **140**/locking wedge **180** assembly causes movement of the grip **190**/locking nut **140**/ locking wedge **180** assembly up and down relative to first rotation stop **130**. Because the second rotation stop **150** is fixedly secured to the first rotation stop **130**, the locking nut **140** is slidable against the second rotation stop **150**.

When securing or locking the small leg section **110** and large leg section **120** together (i.e., when the small leg section **110** is in the desired position relative to the large leg section **120**), a user turns or rotates the grip **190** in the locking direction. In the embodiment shown, that direction is counterclockwise. Rotation of the grip **190** (e.g., in the counterclockwise direction in the embodiments shown) causes movement of the grip **190**/locking nut **140**/locking wedge **180** assembly upwards. This upward movement is caused by the engagement of the threads on the locking nut **140** with the threads of the first rotation stop **130**. As the grip **190**/locking nut **140**/locking wedge **180** assembly moves upward, the bearing surface **182** of the locking wedge **180** pushes upward against the bearing surface **172** of the locking ring **170**. This movement in essence compresses the locking ring **170** between the locking wedge **180** and first rotation stop **130**. The angle of the bearing surfaces **172**, **182** and bearing surface **174** and the lower bearing surface of protuberance **134** cause the locking ring **170** to push inward against the small leg section **110**, as shown in further detail in FIG. 6. Upward movement of the locking nut **140** is prevented by contact between bearing surface **140** of the locking nut **140** and bearing surface **139** of the first rotation stop **130**, as shown in FIG. 8.

Rotation of the grip **190** in the opposite direction (e.g., in the clockwise direction in the embodiments shown) loosens the locking assembly **200**. Clockwise rotation of the grip **190** causes downward movement of the grip **190**/locking nut **140**/locking wedge **180** assembly by way of the threaded engagement of the locking nut **140** with the first rotation stop **130**. Downward movement of the locking nut **140** is limited by contact between bearing surface **142** of the locking nut **140** and bearing surface **152** of the second rotation stop **150**, as shown in FIG. 7. As the grip **190**/locking nut **140**/locking wedge **180** assembly moves downward, the locking wedge **180** ceases pushing on the locking ring **170**, and the locking ring **170** therefore releases the small leg section **110** (i.e., the locking ring **170,** and particularly bearing surfaces **172**, **174**, disengages bearing surface **182** and the lower bearing surface of protuberance **134**, respectively). The small leg section **110** becomes again slidable within the lock assembly **200**.

In the embodiment shown, the lock assembly **200** is specifically designed for the grip **190** to be rotated a total of $\frac{1}{2}$ turn about the assembly **200**. In particular, as shown in FIG. 7, the distance **202** between bearing surface **142** and bearing surface **152** has a maximum of 0.5 mm. This 0.5 mm gap is paired with a 1 mm thread pitch on the locking nut **140** and first rotation stop **130**. With the 0.5 mm gap, a user can rotate the grip **190** a half turn which will cause the grip **190**/locking nut **140**/locking wedge **180** assembly to travel 0.5 mm downward and the bearing surfaces **142**, **152** to meet. One of skill in the art can appreciate that the maximum distance **202** and the thread pitch on the locking nut **140** and first rotation stop **130** can be adjusted to achieve a desired amount of twist. That is, if a user desires a full turn to lock/unlock the small leg section **110**, a maximum space height of 1.5 mm is desired if the thread pitch is kept at 1 mm.

The space **204** shown in FIG. 8 between bearing surface **130** and bearing surface **149** has a maximum height of greater than that distance **202**. Providing a space with a height greater than distance **202** allows a user to tighten the lock assembly **200** beyond the $\frac{1}{2}$ turn to unlock the lock assembly **200**. It is sometimes desirable to tighten the lock assembly **200** to different degrees depending, for example, on the weight of the viewing optic mounted to the stationary platform. The heavier the viewing optic, the tighter the lock assembly **200** must be tightened.

The disclosure is now further described by the following paragraphs:
1. A locking assembly comprising:
   a first column portion;
   an insert having a first end contained within the first column portion, a threaded channel passing through at least a portion of the first end, an inner cavity, and a second end that opens to the inner cavity;
   a second column portion having a main body and a first end, the first end having a shape corresponding to that of the inner cavity of the insert, wherein the first end is slidingly but not rotatably engaged with the inner cavity of the insert, the second column portion further having a channel through the first end, the channel being coaxial with the threaded channel of the insert; and
   a fastening rod having a threaded end, wherein the fastening rod passes through the channel of the second column portion and engages the threaded channel of the insert.
2. The locking assembly of paragraph 1, wherein the first column portion has a hollow interior.
3. The locking assembly of any of the preceding paragraphs, wherein the first column portion has a generally circular cross-section along a length of the first column portion.
4. The locking assembly of any of the preceding paragraphs, wherein the insert is secured within an end portion of the first column portion.
5. The locking assembly of any of the preceding paragraphs, wherein the insert has a first end that is solid contained within the first column portion.
6. The locking assembly of any of the preceding paragraphs, wherein the fastening rod further includes a fastening ring adjacent the threaded end, wherein the fastening ring has external dimensions greater than those of the channel of the second column portion.
7. The locking assembly of any of the preceding paragraphs, wherein the inner cavity of the insert has a non-circular cross-section.
8. The locking assembly of any of the preceding paragraphs, wherein the shape of the inner cavity of the insert is selected from square, rectangular, triangular, and polygonal.
9. The locking assembly of any of the preceding paragraphs, wherein the first end of the second column has a non-circular cross-section.
10. The locking assembly of any of the preceding paragraphs, wherein the shape of the first end of the second column is selected from square, rectangular, triangular, and polygonal.
11. The locking assembly of any of the preceding paragraphs, wherein the non-circular cross-section of the inner cavity of the insert is square.
12. The locking assembly of any of the preceding paragraphs, wherein the non-circular cross-section of the first end of the second column portion is square.
13. The locking assembly of any of the preceding paragraphs, wherein the first column portion has an outer diameter which is the same as an outer diameter of the main body of the second column portion.
14. A stationary platform comprising a central column, the central column comprising the locking assembly of any of the preceding paragraphs.
15. The stationary platform of claim 8, wherein the stationary platform is a tripod.
16. A locking assembly comprising:
   a locking ring secured to a first cylindrical section, the first cylindrical section insertable into a second cylindrical section and having a bearing surface at a second edge;
   a first rotation stop secured to the second cylindrical section at a first end and slidable against the locking ring at a second end; and
   a locking nut having a first end in threaded engagement with the first end of the rotation stop and having a second end secured to a locking wedge having a bearing surface,
   wherein rotational movement of the locking nut in a first direction causes the bearing surface of the locking wedge to engage the bearing surface of the locking ring and rotational movement of the locking nut in a second direction causes the bearing surface of the locking wedge to disengage the bearing surface of the locking ring.
17. The locking assembly of paragraph 16, wherein the locking ring has a first edge containing a second bearing surface and the first rotation stop has a bearing surface corresponding to the second bearing surface of the locking ring.
18. The locking assembly of any of the preceding paragraphs, wherein rotational movement of the locking nut in the first direction causes the second bearing surface of the locking ring to engage the bearing surface of the first rotation stop and rotational movement of the locking nut in the second direction causes the second bearing surface of the locking ring to disengage the bearing surface of the first rotation stop.
19. The locking assembly of any of the preceding paragraphs, wherein the locking ring, first rotation stop, locking nut and locking wedge are generally cylindrical and coaxial with each other and the first and second cylindrical sections.
20. The locking assembly of any of the preceding paragraphs, wherein the first rotation stop has a second bearing surface and the locking nut has a first bearing surface, the second bearing surface of the first rotation stop and the first bearing surfaces of the locking nut being opposed to one another, and wherein rotational movement of the locking nut in the first direction is limited by engagement of the second bearing surface of the first rotation stop and the first bearing surface of the locking nut.
21. The locking assembly of any of the preceding paragraphs, further including a second rotation stop secured to the first rotation stop, wherein the locking nut is slidable against the second rotation stop.
22. The locking assembly of any of the preceding paragraphs, wherein the second rotation stop has a first bearing surface and the locking nut has a second bearing surface, the first bearing surface of the second rotation stop and the second bearing surface of the locking nut being opposed to one another, and wherein rotational movement of the locking nut in the second direction is limited by engagement of the first bearing surface of the second rotation stop and the second bearing surface of the locking nut.
23. The locking assembly of any of the preceding paragraphs, wherein the first end of the first rotation stop and the first end of the locking nut are correspondingly threaded, and wherein the thread pitch is from 0.5 mm to 1.5 mm.
24. The locking assembly of any of the preceding paragraphs, wherein the first end of the first rotation stop and the first end of the locking nut are correspondingly threaded, and wherein the thread pitch is at least 0.5 mm.
25. The locking assembly of any of the preceding paragraphs, wherein the first end of the first rotation stop and the first end of the locking nut are correspondingly threaded, and wherein the thread pitch is no greater than 1.5 mm.
26. The locking assembly of any of the preceding paragraphs, wherein the first end of the first rotation stop and the first end of the locking nut are correspondingly threaded, and wherein the thread pitch is from 0.5 mm to 0.75 mm.
27. The locking assembly of any of the preceding paragraphs, wherein the first end of the **f**irst rotation stop and the first end of the locking nut are correspondingly threaded, and wherein the thread pitch is from 0.5 mm to 1.0 mm.
28. The locking assembly of any of the preceding paragraphs, wherein the first end of the first rotation stop and the first end of the locking nut are correspondingly threaded, and wherein the thread pitch is from 0.5 mm to 1.25 mm.
29. The locking assembly of any of the preceding paragraphs, wherein the first end of the first rotation stop and the first end of the locking nut are correspondingly threaded, and wherein the thread pitch is from 0.75 mm to 1.25 mm.
30. The locking assembly of any of the preceding paragraphs, wherein the first end of the first rotation stop and the first end of the locking nut are correspondingly threaded, and wherein the thread pitch is from 1.0 mm to 1.25 mm.
31. The locking assembly of any of the preceding paragraphs, further including a grip secured to the locking nut and locking wedge.
32. A stationary platform comprising at least one telescoping leg comprising the locking assembly of any of the preceding paragraphs.
33. The stationary platform of paragraph 32, further comprising a second locking assembly, the second locking assembly comprising:
   a first column portion having a hollow interior with a generally circular cross-section along a length of the first column portion;
   an insert secured within an end portion of the first column portion, the insert having a first end which is solid contained within the first column portion, a threaded channel passing through the solid end, an inner cavity, and a second end which opens to the inner cavity;
   wherein the inner cavity has a non-circular cross-section;
   a second column portion having a main body and a first end, the first end having a non-circular cross-section corresponding to that of the inner cavity of the insert, wherein the first end is slidingly but not rotatably engaged with the inner cavity of the insert, the second column portion further having a channel through the first end, the channel being coaxial with the threaded channel of the insert; and
   a fastening rod having a threaded end, wherein the fastening rod passes through the channel of the second column portion and engages the threaded channel of the insert.

The invention provides, inter alia, the subject-matter of the following clauses.
1. A locking assembly comprising:
   a first column portion having a hollow interior with a generally circular cross-section along a length of the first column portion;
   an insert secured within an end portion of the first column portion, the insert having a first end which is solid contained within the first column portion, a threaded channel passing through the solid end, an inner cavity, and a second end which opens to the inner cavity;
   wherein the inner cavity has a non-circular cross-section;
   a second column portion having a main body and a first end, the first end having a non circular cross-section corresponding to that of the inner cavity of the insert, wherein the first end is slidingly but not rotatably engaged with the inner cavity of the insert, the second column portion further having a channel through the first end, the channel being coaxial with the threaded channel of the insert; and
   a fastening rod having a threaded end, wherein the fastening rod passes through the channel of the second column portion and engages the threaded channel of the insert.
2. The locking assembly of clause 1, wherein the fastening rod further includes a fastening ring adjacent the threaded end, wherein the fastening ring has external dimensions greater than those of the channel of the second column portion.
3. The locking assembly of clause 1, wherein the non-circular cross-section of the inner cavity of the insert is selected from square, rectangular, triangular, and polygonal.
4. The locking assembly of clause 3, wherein the non-circular cross-section of the first end of the second column is selected from square, rectangular, triangular, and polygonal.
5. The locking assembly of clause 4, wherein the non-circular cross-section of the inner cavity of the insert is square.
6. The locking assembly of clause 5, wherein the non-circular cross-section of the first end of the second column portion is square.
7. The locking assembly of clause 1, wherein the first column portion has an outer diameter which is the same as an outer diameter of the main body of the second column portion.
8. A stationary platform comprising a central column, the central column comprising the locking assembly of clause 1.
9. The stationary platform of clause 8, wherein the stationary platform is a tripod.
10. A locking assembly comprising:
   a locking ring secured to a first cylindrical section, the first cylindrical section insertable into a second cylindrical section and having a bearing surface at a second edge;
   a first rotation stop secured to the second cylindrical section at a first end and slidable against the locking ring at a second end; and
   a locking nut having a first end in threaded engagement with the first end of the rotation stop and having a second end secured to a locking wedge having a bearing surface,
   wherein rotational movement of the locking nut in a first direction causes the bearing surface of the locking wedge to engage the bearing surface of the locking ring and rotational movement of the locking nut in a second direction causes the bearing surface of the locking wedge to disengage the bearing surface of the locking ring.
11. The locking assembly of clause 10, wherein the locking ring has a first edge containing a second bearing surface and the first rotation stop has a bearing surface corresponding to the second bearing surface of the locking ring.
12. The locking assembly of clause 11, wherein rotational movement of the locking nut in the first direction causes the second bearing surface of the locking ring to engage the bearing surface of the first rotation stop and rotational movement of the locking nut in the second direction causes the second bearing surface of the locking ring to disengage the bearing surface of the first rotation stop.
13. The locking assembly of clause 10, wherein the locking ring, first rotation stop, locking nut and locking wedge are generally cylindrical and coaxial with each other and the first and second cylindrical sections.
14. The locking assembly of clause 10, wherein the first rotation stop has a second bearing surface and the locking nut has a first bearing surface, the second bearing surface of the first rotation stop and the first bearing surfaces of the locking nut being opposed to one another, and wherein rotational movement of the locking nut in the first direction is limited by engagement of the second bearing surface of the first rotation stop and the first bearing surface of the locking nut.
15. The locking assembly of clause 10, further including a second rotation stop secured to the first rotation stop, wherein the locking nut is slidable against the second rotation stop.
16. The locking assembly of clause 15, wherein the second rotation stop has a first bearing surface and the locking nut has a second bearing surface, the first bearing surface of the second rotation stop and the second bearing surface of the locking nut being opposed to one another, and wherein rotational movement of the locking nut in the second direction is limited by engagement of the first bearing surface of the second rotation stop and the second bearing surface of the locking nut.
17. The locking assembly of clause 10, wherein the first end of the first rotation stop and the first end of the locking nut are correspondingly threaded, and wherein the thread pitch is from 0.5 mm to 1.5 mm.
18. The locking assembly of clause 10, further including a grip secured to the locking nut and locking wedge.
19. A stationary platform comprising at least one telescoping leg comprising the locking assembly of clause 10.
20. The stationary platform of clause 19, further comprising a second locking assembly, the second locking assembly comprising:
   a first column portion having a hollow interior with a generally circular cross-section along a length of the first column portion;
   an insert secured within an end portion of the first column portion, the insert having a first end which is solid contained within the first column portion, a threaded channel passing through the solid end, an inner cavity, and a second end which opens to the inner cavity;
   wherein the inner cavity has a non-circular cross-section;
   a second column portion having a main body and a first end, the first end having a non circular cross-section corresponding to that of the inner cavity of the insert, wherein the first end is slidingly but not rotatably engaged with the inner cavity of the insert, the second column portion further having a channel through the first end, the channel being coaxial with the threaded channel of the insert; and
   a fastening rod having a threaded end, wherein the fastening rod passes through the channel of the second column portion and engages the threaded channel of the insert.

Various modifications and variations of the described structures, assemblies, apparatuses and methods of the invention will be apparent to those skilled in the art without departing from the scope and spirit of the invention. One skilled in the art will recognize at once that it would be possible to construct the present invention from a variety of materials and in a variety of different ways. Although the invention has been described in connection with specific preferred embodiments, it should be understood that the invention should not be unduly limited to such specific embodiments. While the preferred embodiments have been described in detail, and shown in the accompanying drawings, it will be evident that various further modifications are possible without departing from the scope of the invention as set forth in the appended claims. Indeed, various modifications of the described modes for carrying out the invention which are obvious to those skilled in marksmanship or related fields are intended to be within the scope of the following claims.

## Claims

1. A locking assembly (200) comprising:
a locking ring (170) secured to a first cylindrical section (110), the first cylindrical section insertable into a second cylindrical section (120) and having a bearing surface at a second edge;
a first rotation stop (130) secured to the second cylindrical section at a first end and slidable against the locking ring at a second end; and
a locking nut (140) having a first end in threaded engagement with the first end of the rotation stop and having a second end secured to a locking wedge (180) having a bearing surface,
wherein rotational movement of the locking nut in a first direction causes the bearing surface of the locking wedge to engage the bearing surface of the locking ring and rotational movement of the locking nut in a second direction causes the bearing surface of the locking wedge to disengage the bearing surface of the locking ring.

2. The locking assembly of claim 1, wherein the locking ring has a first edge containing a second bearing surface and the first rotation stop has a bearing surface corresponding to the second bearing surface of the locking ring.

3. The locking assembly of claim 2, wherein rotational movement of the locking nut in the first direction causes the second bearing surface of the locking ring to engage the bearing surface of the first rotation stop and rotational movement of the locking nut in the second direction causes the second bearing surface of the locking ring to disengage the bearing surface of the first rotation stop.

4. The locking assembly of claim 1, claim 2 or claim 3, wherein the locking ring, first rotation stop, locking nut and locking wedge are generally cylindrical and coaxial with each other and the first and second cylindrical sections.

5. The locking assembly of claim 1 or any of claims 2 to 4, wherein the first rotation stop has a second bearing surface and the locking nut has a first bearing surface, the second bearing surface of the first rotation stop and the first bearing surfaces of the locking nut being opposed to one another, and wherein rotational movement of the locking nut in the first direction is limited by engagement of the second bearing surface of the first rotation stop and the first bearing surface of the locking nut.

6. The locking assembly of claim 1 or of any of claims 2 to 5, further including a second rotation stop (150) secured to the first rotation stop, wherein the locking nut is slidable against the second rotation stop.

7. The locking assembly of claim 6, wherein the second rotation stop has a first bearing surface and the locking nut has a second bearing surface, the first bearing surface of the second rotation stop and the second bearing surface of the locking nut being opposed to one another, and wherein rotational movement of the locking nut in the second direction is limited by engagement of the first bearing surface of the second rotation stop and the second bearing surface of the locking nut.

8. The locking assembly of claim 1 or of any of claims 2 to 7, wherein the first end of the first rotation stop and the first end of the locking nut are correspondingly threaded, and wherein the thread pitch is from 0.5 mm to 1.5 mm.

9. The locking assembly of claim 1 or of any of claims 2 to 8, further including a grip (190) secured to the locking nut and locking wedge.

10. A stationary platform (300) comprising at least one telescoping leg (310) comprising the locking assembly (200) of claim 1 or of any of claims 2 to 9.

11. The stationary platform of claim 10, further comprising a second locking assembly, the second locking assembly comprising:
a first column portion (10) having a hollow interior with a generally circular cross-section along a length of the first column portion;
an insert (30) secured within an end portion of the first column portion, the insert having a first end which is solid contained within the first column portion, a threaded channel passing through the solid end, an inner cavity (34), and a second end which opens to the inner cavity;
wherein the inner cavity has a non-circular cross-section;
a second column portion (20) having a main body and a first end, the first end having a non circular cross-section corresponding to that of the inner cavity of the insert, wherein the first end is slidingly but not rotatably engaged with the inner cavity of the insert, the second column portion further having a channel through the first end, the channel being coaxial with the threaded channel of the insert; and
a fastening rod (40) having a threaded end, wherein the fastening rod passes through the channel of the second column portion and engages the threaded channel of the insert.
